# EUROPEAN PATENT APPLICATION

(11) **EP 4 471 524 A1**
(43) Date of publication of application: **04.12.2024**
(21) Application number: 23746920.0
(22) Date of filing: 24.01.2023
(51) Int. Cl.: G05D 1/00, G05D 1/02, G08G 1/09

(54) **INFORMATION OUTPUT METHOD, INFORMATION OUTPUT DEVICE, AND PROGRAM**

(30) Priority: 28.01.2022 JP 2022011925
(71) Applicant: Panasonic Intellectual Property Management Co., Ltd., Kadoma-shi, Osaka 571-0057 (JP)
(72) Inventor: KOYAMA, Tatsuya, Kadoma-shi, Osaka 571-0057 (JP); ARAI, Toshiya, Kadoma-shi, Osaka 571-0057 (JP); KUSAKABE, Toshihiko, Kadoma-shi, Osaka 571-0057 (JP)
(74) Representative: Novagraaf International SA
(86) International application number: PCT/JP2023/002009
(87) International publication number: WO 2023/145709

(57) **Abstract**

An information output method is an information output method in an information output device. The information output method includes: obtaining first information regarding a movement of a first mobile object operated by autonomous mobility and remote control; detecting, based on the first information, an event that occurs while the first mobile object is moving; obtaining second information regarding an operator who intervenes an operation of the first mobile object; calculating an importance level of the event based on at least one of the first information or the second information; and outputting control information for controlling a second mobile object to prevent occurrence of the event whose importance level calculated satisfies a predetermined condition.

## Description

### [Technical Field]

The present invention relates to an information output method, an information output device, and a program.

### [Background Art]

In recent years, with improvement in the robot control technology, a technique has been developed which uses machine learning to cause a robot to automatically perform the same mobility control as when operated by a human (see Patent Literature (PTL 1)). The application of autonomous mobile robots to various services has been suggested.

### [Citation List]

### [Patent Literature]

[PTL 1] Japanese Unexamined Patent Application Publication No. 2018-149669

### [Summary of Invention]

### [Technical Problem]

In some services, even when such robots are autonomously moved, operators stand by at a remote site for a possible emergency and are ready to intervene in the operations of the robots in response to requests from the robots. Unfortunately, in order to introduce such operators, personnel costs are necessary. Accordingly, efficient personnel costs that allow reduction in the number of operators are required to decrease the barrier to enter into the service. It is to be noted that excess reduction in the number of operators may exert a bad effect on the management of the service.

In view of this, the present disclosure provides an information output method or the like that allows for efficient personnel costs while maintaining a proper service management.

### [Solution to Problem]

An information output method according to one aspect of the present invention is an information output method in an information output device. The information output method includes: obtaining first information regarding a movement of a first mobile object operated by autonomous mobility and remote control; detecting, based on the first information, an event that occurs while the first mobile object is moving; obtaining second information regarding an operator who intervenes an operation of the first mobile object; calculating an importance level of the event based on at least one of the first information or the second information; and outputting control information for controlling a second mobile object to prevent occurrence of the event whose importance level calculated satisfies a predetermined condition.

It should be noted that these general and specific aspects may be implemented using a system, a device, an integrated circuit, a computer program, or a computer-readable recording medium such as a CD-ROM, or any combination of systems, devices, integrated circuits, computer programs, and recording media.

### [Advantageous Effects of Invention]

The information output method or the like according to the present disclosure allows for efficient personnel costs while maintaining a proper service management.

### [Brief Description of Drawings]

[FIG. 1]

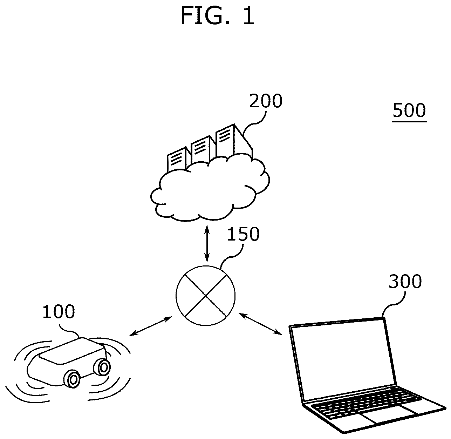

   FIG. 1 is a diagram schematically illustrating the outline of an information output device according to an embodiment.
[FIG. 2]

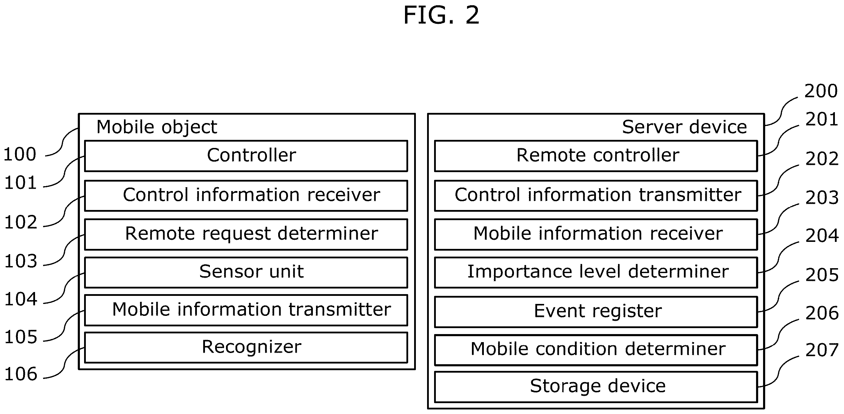

   FIG. 2 is a diagram schematically illustrating the functional configuration of the information output device according to the embodiment.
[FIG. 3]

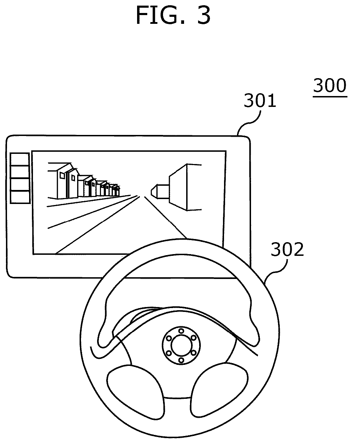

   FIG. 3 is a diagram schematically illustrating the configuration of a remote intervention device according to the embodiment.
[FIG. 4]

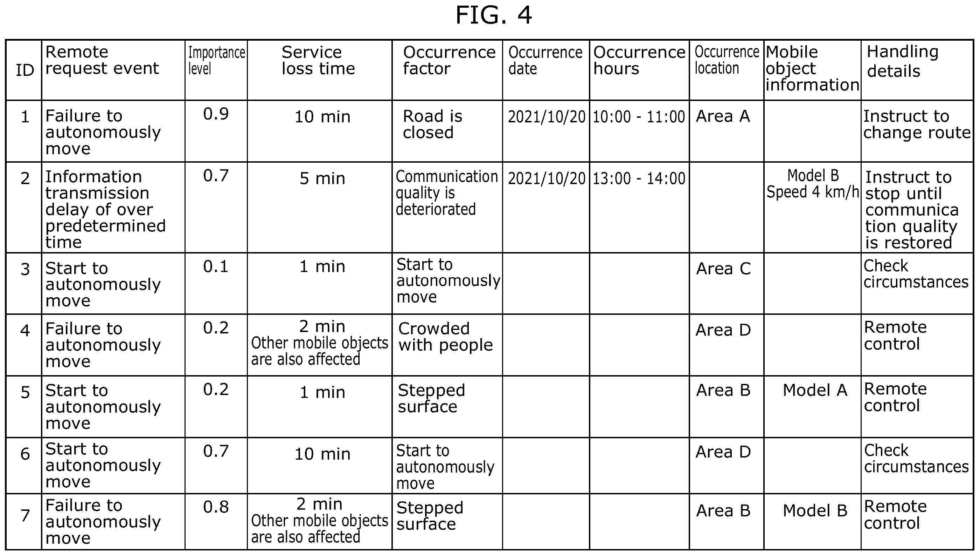

   FIG. 4 is a diagram illustrating an example of an event database according to the embodiment.
[FIG. 5]

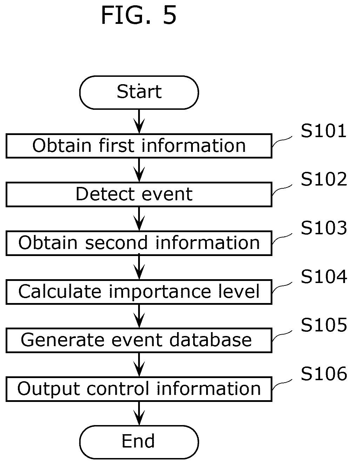

   FIG. 5 is a flowchart illustrating the process of an information output system according to the embodiment.
[FIG. 6]

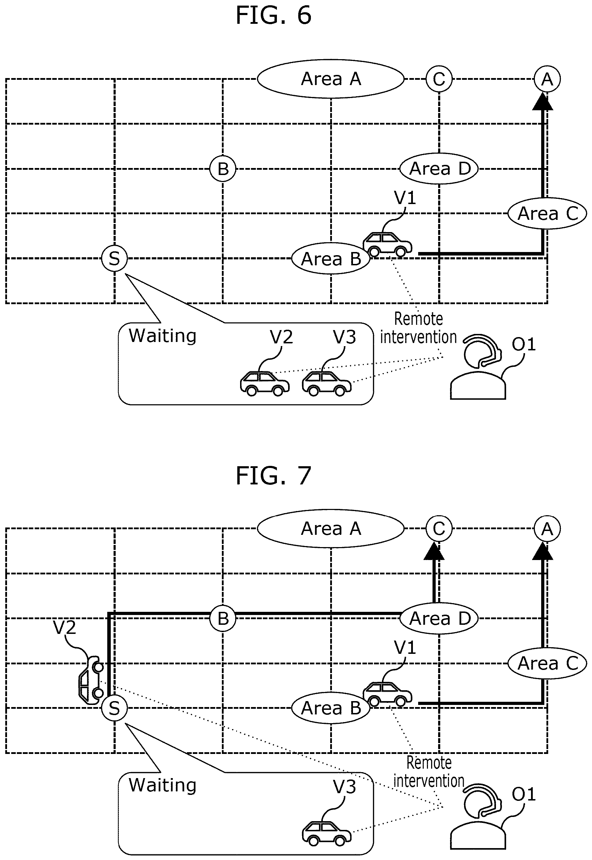

   FIG. 6 is the first diagram for explaining the process of the information output system according to the embodiment.
[FIG. 7]
   FIG. 7 is the second diagram for explaining the process of the information output system according to the embodiment.
[FIG. 8]

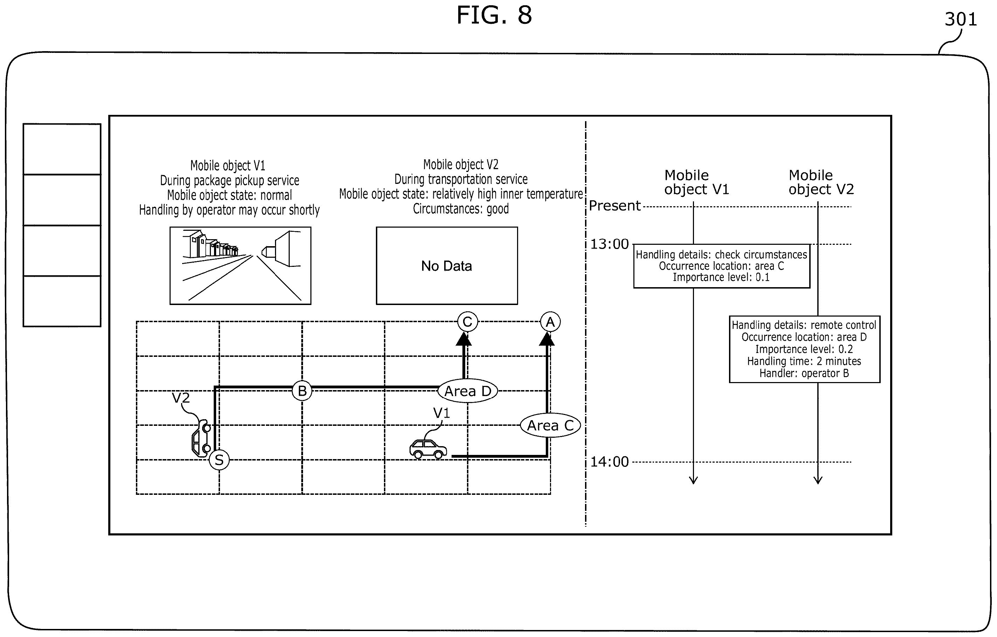

   FIG. 8 is a diagram illustrating an example of a user interface for operator input according to the embodiment.
[FIG. 9]

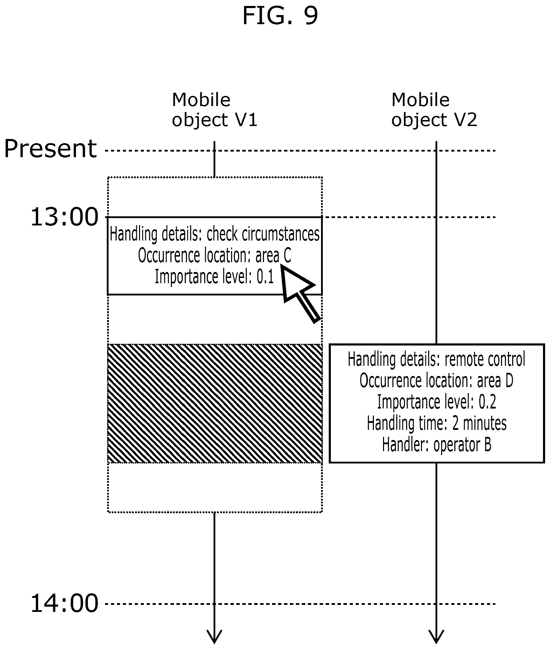

   FIG. 9 is a diagram illustrating another example of the user interface for operator input according to the embodiment.
[FIG. 10]

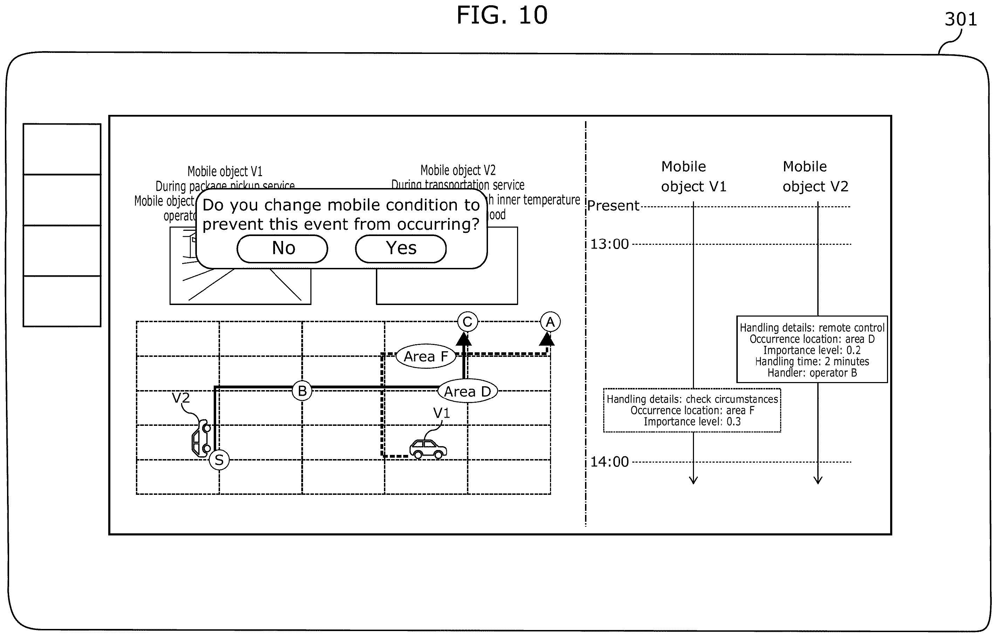

   FIG. 10 is a diagram illustrating another example of the user interface for operator input according to the embodiment.

### [Description of Embodiments]

### (Underlying Knowledge Forming Basis of the Present Disclosure)

The inventor of the present disclosure has found that the following problems arise with the technique which causes robots or the like to automatically perform the control (autonomous operation), described in the "Background Art" section.

In order to automatically perform such a robot control, the service is required to be properly managed by keeping operators, the number of which is suitable for the number of robots, on standby and by intervening in the operations of the robots, if necessary. In other words, a suitable number of operators are necessary for the proper service management. When the number of robots is increased to expand the service, the personnel costs become enormously expensive accordingly. When it is assumed that the service is managed by operators relatively fewer than the robots, the number of assigned robots per operator is increased. Accordingly, the operator is late for intervention in the operations of the robots, which may degrade the service efficiency (exert a bad effect on the service management), e.g., may stop part of the robots or may reduce the operation speeds of the robots. Moreover, such a long heavy burden on the operator triggers operator's mistake in intervening, and an accident or the like may occur. In view of this, the present disclosure provides an information output method which allows for the efficient personnel costs while maintaining the proper service management by preventing the occurrence of, particularly, an event that exerts a bad effect on the service management among requests requiring operator interventions (i.e., remote request events) to reduce the burden on the operator.

In order to solve the above problem, an information output method according to Aspect 1 of the present disclosure is an information output method in an information output device. The information output method includes: obtaining first information regarding a movement of a first mobile object operated by autonomous mobility and remote control; detecting, based on the first information, an event that occurs while the first mobile object is moving; obtaining second information regarding an operator who intervenes an operation of the first mobile object; calculating an importance level of the event based on at least one of the first information or the second information; and outputting control information for controlling a second mobile object to prevent occurrence of the event whose importance level calculated satisfies a predetermined condition.

For an event that occurs while the first mobile object is moving, such an information output method can calculate an importance level based on at least one of the first information or the second information. For example, in the case where the importance level is a level indicating an undesired occurrence such as a burden on the operator in the event that has occurred, in controlling the second mobile object, an undesired occurrence state such as the burden on the operator can be reduced by outputting the control information that prevents the occurrence of an event satisfying the predetermined condition such as a high importance level. In this manner, the burden on the operator who intervenes in the operations of the mobile objects, or the like is reduced. Accordingly, it becomes possible to increase the number of mobile objects per operator to intervene in the operations. This allows for the efficient personnel costs while maintaining the proper service management.

Moreover, for example, an information output method according to Aspect 2 is the information output method according to Aspect 1, in which the outputting of the control information includes: referring to an event database in which the event and the importance level calculated for the event are associated with each other; and outputting the control information for controlling the second mobile object to prevent occurrence of the event associated with an importance level satisfying the predetermined condition in the event database.

In this manner, in controlling the second mobile object, an undesired occurrence state such as the burden on the operator can be reduced by referring to the event database and outputting the control information that prevents the occurrence of an event satisfying the predetermined condition such as a high importance level.

Moreover, for example, an information output method according to Aspect 3 is the information output method according to Aspect 2, further including: generating the event database by accumulating the following in a storage in association with each other: the event detected based on the first information; and the importance level calculated for the event.

In this manner, it is possible to generate the event database in which the event detected based on the first information and the importance level calculated for this event are associated with each other.

Moreover, for example, an information output method according to Aspect 4 is the information output method according to Aspect 3, in which in the event database, the event detected, the importance level calculated for the event, and a parameter regarding an occurrence factor of the event are associated with one another, and the generating of the event database further includes: obtaining a different parameter matching the parameter associated with one event accumulated; and accumulating the following in the storage in association with the different parameter obtained: the one event; and an importance level corresponding to the importance level associated with the one event.

In this manner, it is possible to generate a virtual event to improve the event database by obtaining a different parameter matching the parameter associated with one event accumulated and by newly associating the one event, an importance level corresponding to the importance level associated with this one event, and the different parameter obtained, with one another.

Moreover, for example, an information output method according to Aspect 5 is the information output method according to Aspect 3, in which in the event database, the event detected, the importance level calculated for the event, and a parameter regarding an occurrence time of the event are associated with one another, and when the parameter associated with one event accumulated and the parameter associated with another event accumulated indicate periodicity, the generating of the event database further includes accumulating the following in the storage in association with one another: a different parameter indicating the periodicity for the parameter associated with the one event and the parameter associated with the another event; the one event; and an importance level corresponding to the importance level associated with the one event.

In this manner, it is possible to generate a virtual event to improve the event database by associating one event, an importance level corresponding to the importance level associated with this one event, and a different parameter indicating the periodicity for the parameter associated with the one event and the parameter associated with the another event, with one another.

Moreover, for example, an information output method according to another aspect is the information output method according to Aspect 4 or Aspect 5 in which the importance level associated with the different parameter is lower than the importance level associated with the one event.

In this manner, in outputting the control information for the second mobile object, it is possible to output the control information for controlling the second mobile object to prevent the actually detected event in priority over the virtual event by lowering the importance level of the generated virtual event than the importance level of the actually detected event.

Moreover, for example, an information output method according to Aspect 6 is the information output method according to any one of Aspects 1 to 5, in which in the event database, the event detected, the importance level calculated for the event, and one or more condition parameters regarding an occurrence condition of the event are associated with one another, and the outputting of the control information includes outputting the control information for controlling the second mobile object to have a condition with one or more condition parameters that do not at least partially match the one or more condition parameters associated with the event whose importance level calculated satisfies the predetermined condition.

In this manner, it is possible to prevent the occurrence of the event whose importance level satisfies the predetermined condition by outputting the control information for controlling the second mobile object to have a condition with condition parameters that do not at least partially match the condition parameters associated with the event whose importance level satisfies the predetermined condition.

Moreover, for example, an information output method according to Aspect 7 is the information output method according to Aspect 6, in which the one or more condition parameters include information indicating a route along which the first mobile object moves, and the outputting of the control information includes outputting the control information for controlling the second mobile object to move along a route different from the route indicated by the information included in the one or more condition parameters associated with the event whose importance level calculated satisfies the predetermined condition.

In this manner, it is possible to prevent the occurrence of the event whose importance level satisfies the predetermined condition by outputting the control information for controlling the second mobile object to move along a route different from the route indicated by the information included in the condition parameters associated with the event whose importance level satisfies the predetermined condition.

Moreover, for example, an information output method according to Aspect 8 is the information output method according to Aspect 6, in which the one or more condition parameters include information indicating a type of the first mobile object, and the outputting of the control information includes outputting the control information for controlling the second mobile object whose type is different from the type indicated by the information included in the one or more condition parameters associated with the event whose importance level calculated satisfies the predetermined condition.

In this manner, it is possible to prevent the occurrence of the event whose importance level satisfies the predetermined condition by outputting the control information for controlling the second mobile object whose type is different from the type indicated by the information included in the condition parameters associated with the event whose importance level satisfies the predetermined condition.

Moreover, for example, an information output method according to Aspect 9 is the information output method according to Aspect 6, in which the one or more condition parameters include information indicating a traveling history of the first mobile object, and the outputting of the control information includes outputting the control information for controlling the second mobile object to do traveling different from the traveling history indicated by the information included in the one or more condition parameters associated with the event whose importance level calculated satisfies the predetermined condition.

In this manner, it is possible to prevent the occurrence of the event whose importance level satisfies the predetermined condition by outputting the control information for controlling the second mobile object to do traveling different from the traveling history indicated by the information included in the condition parameters associated with the event whose importance level satisfies the predetermined condition.

Moreover, for example, an information output method according to Aspect 10 is the information output method according to Aspect 6, in which the one or more condition parameters include information indicating hours during which the first mobile object moves, and the outputting of the control information includes outputting the control information for controlling the second mobile object during hours different from the hours indicated by the information included in the one or more condition parameters associated with the event whose importance level calculated satisfies the predetermined condition.

In this manner, it is possible to prevent the occurrence of the event whose importance level satisfies the predetermined condition by outputting the control information for controlling the second mobile object during hours different from the hours indicated by the information included in the condition parameters associated with the event whose importance level satisfies the predetermined condition.

Moreover, for example, an information output method according to Aspect 11 is the information output method according to any one of Aspects 1 to 10, in which the operator intervenes in operations of one or more second mobile objects each of which moves according to the control information outputted, the one or more second mobile objects each being the second mobile object, and the outputting of the control information includes: calculating, for each of the one or more second mobile objects, an estimated importance level of an anticipated event of the second mobile object when moving according to the control information to be outputted; and outputting the control information for controlling the second mobile object to prevent a sum of estimated importance levels calculated for all the one or more second mobile objects from exceeding an importance-level threshold set for the operator.

In this manner, the control information is outputted to prevent a sum of estimated importance levels of anticipated events of the second mobile objects when moving according to each control information to be outputted, from exceeding the importance-level threshold set for the operator. In the case where the importance-level threshold set for an operator indicates a sum of importance levels each determined from an allowable amount for the intervention in the operation of the mobile object based on the experience, skill, or the like of the operator, the second mobile object is controlled in anticipation of occurrence of the event whose importance level is in an allowable intervention range for this operator. In this manner, it is possible to prevent occurrence of the state that exerts a bad effect on the management of the service, e.g., reduces the speed of the second mobile object in response to occurrence of the event whose importance level exceeds the allowable intervention range for the operator.

Moreover, for example, an information output method according to Aspect 12 is the information output method according to Aspect 2 or any one of Aspects 3 to 11 referring to Aspect 2, in which the outputting of the control information includes outputting the control information for controlling the second mobile object to prevent, by referring to the event database, occurrence of the event associated with an importance level satisfying the predetermined condition, and to minimize, based on a quality parameter, an effect on decrease in service quality.

In this manner, the second mobile object is controlled to minimize, based on the quality parameter, the effect on decrease in service quality while preventing occurrence of the event associated with the importance level satisfying the predetermined condition. In other words, together with allowing for the efficient personnel costs while maintaining the proper service management, it is possible to perform the control of the second mobile object in which the service quality is not easily decreased.

Moreover, for example, an information output method according to Aspect 13 is the information output method according to any one of Aspects 1 to 12, further including outputting presentation information for presenting, to the operator, an expected occurrence time of an anticipated event of the second mobile object when moving according to the control information to be outputted, in which the presentation information includes the expected occurrence time of the anticipated event and a time range in which it is allowed to change the expected occurrence time of the anticipated event through input from the operator.

In this manner, the operator can check, through the outputted presentation information, the expected occurrence time of the anticipated event and a time range in which it is allowed to change the expected occurrence time of this anticipated event through input from the operator. For example, the operator can consider, based on the time range included in this presentation information, the change in expected occurrence time of the anticipated event for operator's convenience.

Moreover, for example, an information output method according to another aspect is the information output method according to any one of Aspects 1 to 13, in which the first information includes at least one of sensing data obtained by a sensor placed in the first mobile object, a time when the first mobile object arrives at the destination, information regarding a date and time, or whether the communication environment between the first mobile object and the outside has degraded.

In this manner, it is possible to detect an event that occurs while the first mobile object is moving and to calculate the importance level of this event, based on the first information including at least one of sensing data obtained by the sensor placed in the first mobile object, a time when the first mobile object arrives at the destination, information regarding a date and time, or whether the communication environment between the first mobile object and the outside has degraded.

Moreover, for example, an information output method according to another aspect is the information output method according to any one of Aspects 1 to 13, in which the second information includes at least one of time taken for the operator to intervene in the operation of the first mobile object, operator's physical burden in intervening in the operation of the first mobile object, and whether the operator has directly controlled the first mobile object to intervene in the operation of the first mobile object.

In this manner, it is possible to calculate the importance level of the event based on the second information including at least one of time taken for the operator to intervene in the operation of the first mobile object, operator's physical burden in intervening in the operation of the first mobile object, and whether the operator has directly controlled the first mobile object to intervene in the operation of the first mobile object.

Moreover, for example, an information output method according to another aspect is the information output method according to any one of Aspects 1 to 13, in which the event includes at least one of failure to autonomously move of the first mobile object, information transmission delay of over a predetermined time from the first mobile object, or start to autonomously move of the first mobile object.

In this manner, it is possible to detect the event including at least one of failure to autonomously move of the first mobile object, information transmission delay of over a predetermined time from the first mobile object, or start to autonomously move of the first mobile object, and to calculate the importance level of this event.

Moreover, a program according to Aspect 15 of the present disclosure is a program for causing a computer to execute the information output method according to the above aspect (any one of Aspects 1 to 13).

With this, the same advantageous effects as the information output method described above can be produced.

Moreover, the information output device according to Aspect 14 of the present disclosure includes: a first obtainer that obtains first information regarding a movement of a first mobile object operated by autonomous mobility and remote control; a detector that detects, based on the first information, an event that occurs while the first mobile object is moving; a second obtainer that obtains second information regarding an operator who intervenes an operation of the first mobile object; a calculator that calculates an importance level of the event based on at least one of the first information or the second information; and an outputter that outputs control information for controlling a second mobile object to prevent occurrence of the event whose importance level calculated satisfies a predetermined condition.

With this, the same advantageous effects as the information output method described above can be produced.

It is to be noted that these general and specific aspects may be implemented using a system, a device, an integrated circuit, a computer program, or a computer-readable recording medium such as a CD-ROM, or any combination of systems, devices, integrated circuits, computer programs, and recording media.

Hereinafter, an embodiment is described in details with reference to the drawings.

It is to be noted that the embodiment described below shows a general or specific example. The numerical values, shapes, materials, structural elements, the arrangement and connection of the structural elements, steps, the order of steps, etc., illustrated in the following embodiment are mere examples, and therefore do not limit the present invention. Moreover, among the structural elements in the following embodiment, those not recited in any of the independent claims defining the most generic part of the inventive concept are described as optional structural elements.

When the "first mobile object" and the "second mobile object" are used in the description below, the first mobile object refers to a mobile object for use in collecting various types of information to be used to generate an event database, and the second mobile object refers to a mobile object that moves according to the control information outputted based on the generated event database. In other words, the mobile object for use in generating an event database and the mobile object that moves according to the control information based on the generated event database are achieved even when they are one mobile object, and thus the first mobile object and the second mobile object may be the same. It is to be noted that the first mobile object is used earlier than the second mobile object in chronological order to generate an event database. In contrast, the second mobile object is used after generation of an event data, i.e., later than the first mobile object in chronological order.

### [Embodiment]

First, the configuration of an information output device according to an embodiment is described.

FIG. 1 is a diagram schematically illustrating the outline of the information output device according to the embodiment. FIG. 2 is a diagram schematically illustrating the functional configuration of the information output device according to the embodiment. It is to be noted that, in the information output device described below, part of the functional configuration is implemented in mobile object 100, another part is implemented in server device 200, and yet another part is implemented in remote intervention device 300. In other words, the information output device can be regarded as information output system 500 implemented by one or more devices. It is to be noted that information output system 500 may be implemented by randomly allocating function units included in information output system 500 to one, two, four or more devices.

As illustrated in FIG. 1, information output system 500 according to the present embodiment is implemented by mobile object 100, server device 200 connected via network 150, and remote intervention device 300.

Mobile object 100 is a device capable of autonomously traveling, such as an automobile, robot, drone, bicycle, and wheelchair, and is used for the purpose of delivering packages, for example, while the packages are placed therein. Mobile object 100 includes a motor or the like that serves as power, a drive unit such as wheels that are driven by the motor, and a functional unit that stores a power source (for example, electric power) for operating the power.

Network 150 is a communication network for communicably connecting mobile object 100, server device 200, and remote intervention device 300. Here, a communication network, such as the Internet, is used as network 150, but network 150 is not limited to such an example. Moreover, the connection between mobile object 100 and network 150, the connection between server device 200 and network 150, and the connection between remote intervention device 300 and network 150 may be performed by wireless communication or by wired communication. Due to its nature, mobile object 100 may be connected to network 150 by wireless communication.

In order to connect mobile object 100 and network 150 by wired communication, mobile object 100 may include a storage device for accumulating various data. At the time when the power source and the like of mobile object 100 is charged, wired connection may be established between mobile object 100 and network 150, and the various data accumulated in the storage device may be transmitted to network 150.

As illustrated in FIG. 2, mobile object 100 includes controller 101, control information receiver 102, remote request determiner 103, sensor unit 104, mobile information transmitter 105, and recognizer 106. Each functional block included in mobile object 100 is implemented using, for example, a processor and memory. Details of each functional block are described later.

Server device 200 is a device for processing information or the like, and is implemented using, for example, a processor and memory. Server device 200 may be implemented by an edge computer or by a cloud computer. Moreover, one server device 200 may be provided for one mobile object 100, or one server device 200 may be provided for a plurality of mobile objects 100.

As illustrated in FIG. 2, server device 200 includes remote controller 201, control information transmitter 202, mobile information receiver 203, importance level determiner 204, event register 205, mobile condition determiner 206, and storage device 207. Each functional block included in server device 200 is described in details later.

FIG. 3 is a diagram schematically illustrating the configuration of the remote intervention device according to the embodiment. Remote intervention device 300 is implemented, for example, by a computer. As illustrated in FIG. 3, remote intervention device 300 includes, for example, display device 301 and steering unit 302 which is a user interface for input. In addition to steering unit 302, as the user interface, a keyboard, a touch panel, a mouse, etc. may be used, or a combination thereof may be used. Remote intervention device 300 is used to remotely intervene in the operation of mobile object 100. It is to be noted that the intervening in the operation includes performing an interrupt action through remote control or direct control, or merely monitoring the operating state.

Hereinafter, while continuously referring to FIG. 1 to FIG. 3, the transmission and reception of data between each structural element is described, and the function of each structural element will be described.

Sensor unit 104 is connected to sensors (not illustrated), and obtains the result of sensing the surrounding environment of mobile object 100 (sensor information: one item of the first information) from the sensors. Examples of the sensors include cameras, LiDAR, radars, sonars, microphones, GPS, vibration sensors, acceleration sensors, gyro sensors, and temperature sensors. Sensor unit 104 transmits the obtained sensor information to remote request determiner 103, mobile information transmitter 105, recognizer 106, and controller 101.

Recognizer 106 obtains the sensor information transmitted from sensor unit 104, recognizes the surrounding environment of mobile object 100, and transmits the recognition result to remote request determiner 103, mobile information transmitter 105, and controller 101. Recognizer 106 recognizes the surrounding environment necessary for the movement of mobile object 100. For example, recognizer 106 recognizes obstacles to mobile object 100, other mobile objects, and movable regions where mobile object 100 is movable.

Recognizer 106 also performs a process of recognizing the difficulty of movement of mobile object 100 by estimating the difficulty. Here, the difficulty of movement of mobile object 100 is estimated based on, for example, the number of times mobile object 100 applies brakes and the number of times mobile object 100 changes the direction which are required for mobile object 100 to move within the region, and the magnitude and the detected number of vibrations that exert a bad effect on the movement of mobile object 100, and the number of other mobile objects. As the number (or the magnitude) increases, the difficulty of movement of mobile object 100 increases.

At least part of the process of recognizing the surrounding environment by recognizer 106 may be executed sequentially as soon as the sensor information is input from sensor unit 104, or the sensor information may be buffered (accumulated) in a data storage area (not illustrated) and the at least part of the process may be executed later (for example, after the delivery service using mobile object 100 ends). Here, for the recognition of the surrounding environment, a learning model learned in advance using machine learning may be used or the recognition of the surrounding environment may be performed based on a predetermined rule.

Sensor unit 104 and recognizer 106 are an example of the first obtainer that obtains the first information regarding the movement of the mobile object. The first information includes at least one of sensor information (sensing data) obtained by a sensor placed in the mobile object, a time when the mobile object arrives at the destination, information regarding a date and time, or whether the communication environment between the mobile object and the outside has degraded.

Remote request determiner 103 determines whether intervention by an operator is needed, using the sensor information transmitted from sensor unit 104 and the recognition result transmitted from recognizer 106. In other words, remote request determiner 103 detects whether there is an event of intervention in the operation of the first mobile object by an operator, i.e., detects the occurrence of a remote request event (or detects occurring remote request event). Remote request determiner 103 then transmits the detected remote request event to mobile information transmitter 105. The remote request event includes, for example, at least one of failure to autonomously move of the first mobile object, information transmission delay of over a predetermined time from the first mobile object, or start to autonomously move of the first mobile object.

Remote request determiner 103 is an example of the detector that detects, based on the first information, an event that occurs while the mobile object is moving.

Mobile information transmitter 105 transmits the remote request event transmitted from remote request determiner 103 to mobile information receiver 203 of server device 200. Mobile information transmitter 105 also transmits the sensor information and the recognition result at that time (when the remote request event has occurred) to mobile information receiver 203 of server device 200. It is to be noted that transmission and reception of information between mobile object 100 and server device 200, including the communication here, may undergo alteration of information such as compression for the purpose of data reduction and encryption for the purpose of maintaining confidentiality. In this case, restoration of altered information such as decompression of compressed information and decrypting of encrypted information may be performed by the functional block that has received the altered information. In addition, various types of information may be transmitted and received only when the network bandwidth (communication capacity) between mobile object 100 and server device 200 is greater than or equal to a predetermined value. Additional information, such as an ID and timestamp, may also be added to match the information transmitted and received. In such a manner, information may be transmitted and received between mobile object 100 and server device 200 in any forms.

Mobile information receiver 203 transmits the remote request event, sensor information, and recognition result transmitted from mobile information transmitter 105 to remote controller 201, importance level determiner 204, and event register 205.

Remote controller 201 determines the moving direction of mobile object 100 as necessary based on the remote request event, the sensor information, and the recognition result transmitted from mobile information receiver 203, and performs remote control so that mobile object 100 moves in the determined moving direction. Specifically, control information regarding the movement of mobile object 100 for remote control is generated, and is transmitted to control information transmitter 202. The control information is also transmitted to event register 205.

The determination of the moving direction of mobile object 100 according to the present embodiment, i.e., the remote control of mobile object 100 is performed by an operator. Accordingly, remote intervention device 300 illustrated in FIG. 3 is used by an operator.

For example, an image of the surrounding environment of the mobile object included in the sensor information is transmitted from remote controller 201 to remote intervention device 300 and displayed on display device 301. A display device, such as a smartphone or VR/AR glasses, may be used in place of display device 301.

The operator is able to check the sensor information (the image of the surrounding environment in this case) displayed on display device 301. When the operator determines that remote control is necessary, the operator is able to control the moving direction of mobile object 100. The moving direction is determined by the operator determining the region where mobile object 100 is movable. After that, the operator makes an input through the user interface such as steering unit 302 so that mobile object 100 moves in the determined moving direction. An input signal is transmitted from remote intervention device 300 to remote controller 201 based on the input. Remote controller 201 generates control information according to the input signal. The control information generated by remote controller 201 includes information such as the angle of the tires as the driving unit of mobile object 100.

A dedicated controller, a smartphone, a keyboard, a mouse or the like may be used in place of steering unit 302.

The determination of the moving direction of mobile object 100 is also an example of the remote intervention in the operation of mobile object 100. In addition to the determination, the remote intervention includes giving permission to start to autonomously move to mobile object 100 (pressing the OK button, etc.), waiting until a predetermined time (inputting a waiting position and a waiting release condition, etc.), requesting to transmit more detailed sensor information and recognition result, or the like. The intervention in the operation of mobile object 100 also includes not only remote intervention but also on-site intervention in which an operator goes to the location of mobile object 100 to directly control mobile object 100. The remote control of the mobile object may be automatically or semi-automatically performed. For example, the moving direction is automatically determined from among the movable region of mobile object 100 based on the recognition result, and the control information may be generated so that mobile object 100 moves in the determined moving direction. In this case, the intervention by an operator includes an approval operation for accepting or denying the automatically determined moving direction, or the like.

Control information transmitter 202 transmits the control information transmitted from remote controller 201 to control information receiver 102 in mobile object 100. Control information receiver 102 transmits, to controller 101, the control information transmitted from control information transmitter 202. Controller 101 then moves mobile object 100 by driving a driving unit and the like according to the control information transmitted from control information receiver 102.

Here, as described above, information regarding an operator who intervenes in the operation (the second information) is obtained through remote intervention device 300. For this reason, in remote intervention device 300, part of the user interface includes a device for obtaining the second information. The user interface of remote intervention device 300 is an example of the second obtainer. The second information includes at least one of the time taken for the operator to intervene in the operation of mobile object 100, operator's physical burden in intervening in the operation of mobile object 100, and whether the operator has directly controlled mobile object 100 to intervene in the operation of mobile object 100 (whether the on-site intervention has occurred). Such second information includes information that may affect the burden on the operator in the intervention or the service efficiency. In other words, the second information may also be referred to as information regarding such intervention that exerts a bad effect on the proper service management. The obtained second information is transmitted to importance level determiner 204.

Importance level determiner 204 is a functional unit that calculates and assigns an importance level to the detected remote request event. Importance level determiner 204 is an example of the calculator. In the remote request event, importance level determiner 204 obtains the second information transmitted from remote intervention device 300 when the operator intervenes. With this, for each remote request event, importance level determiner 204 can determine whether such operator intervention that exerts a bad effect on the proper service management has occurred. As the determination result, importance level determiner 204 can quantify and calculate the degree of the bad effect exerted on the service management by the intervention performed by the operator in response to the remote request event. Such calculation is performed based on how much different the numerical value indicated by the second information is from an experimentally or experientially determined reference basis.

For example, when the second information is the time taken for the operator to intervene in the operation of mobile object 100, it is inferred that the degree of the bad effect increases as this time increases. Accordingly, the importance level may be calculated to be greater.

For example, when the second information is operator's physical burden in intervening in the operation of mobile object 100, it is inferred that the degree of the bad effect increases as the physical burden increases. Accordingly, the importance level may be calculated to be greater. It is to be noted that the physical burden in this case refers to a burden quantified by the sympathetic-dominance physiological response of the operator, such as increase in heart rate, increase in pulse rate, increase in sweating, or increase in body temperature, and is detected by an appropriate sensor or the like.

For example, when the second information indicates whether the operator has directly controlled mobile object 100 to intervene in the operation of mobile object 100, it is inferred that the degree of the bad effect is greater in the direct control than in the remote control. Accordingly, the importance level may be calculated to be greater.

Importance level determiner 204 also may determine the importance level for a remote request event based on the sensor information and the recognition result.

For example, when the first information indicates a time when the mobile object arrives at the destination, it is inferred that the degree of the bad effect increases as this time increases. Accordingly, the importance level may be calculated to be greater.

For example, when the first information is information regarding a date and time, the occurrence frequency of the remote request event can be calculated using the current first information and the previous first information. It is inferred that the degree of the bad effect increases as the occurrence frequency increases, and thus the importance level may be calculated to be greater. In contrast, it may be inferred that the degree of the bad effect increases as the occurrence frequency decreases since operator's mastery (or skill) of the operation in intervening becomes lower. Thus, the importance level may be calculated to be greater.

For example, when the first information is sensing data obtained by a sensor placed in the mobile object, the risk of the circumstances the mobile object is in can be quantified. The risk in this case indicates approach of people or other mobile objects, a lot of traffic of other mobile objects, image blocking, or the like. It is inferred that the degree of the bad effect increases as the quantified risk increases, and thus the importance level may be calculated to be greater.

The importance level calculated by importance level determiner 204 is transmitted to storage device 207 along with the corresponding remote request event and various parameters, and accumulated in a storage (not illustrated) connected to storage device 207. It is to be noted that the corresponding remote request event refers to the remote request event detected from the first information used in calculation of the importance level, or the remote request event that is a basis of the operator intervention indicated by the second information used in calculation of the importance level. A data set of the remote request event, the importance level, and various parameters, which are associated with one another, is accumulated in the storage. In other words, an event database including the accumulated data sets is generated. One example of the event database is shown in FIG. 4. FIG. 4 is a diagram illustrating an example of the event database according to the embodiment. As shown in FIG. 4, in the event database, a remote request event type, an importance level, a service loss time, an occurrence factor, an occurrence date, occurrence hours, an occurrence location, information regarding a mobile object type and a mobile condition, and handling details by operator are associated with one another.

By referring to this event database to prevent the occurrence of the remote request event associated with the importance level satisfying a predetermined condition such as relatively high importance level, the bad effect exerted on the service management can be relatively limited. When the bad effect is reduced, the intervention in the operation of the mobile object by the operator becomes relatively easy. Accordingly, the proper service management can be maintained even when the number of assigned mobile objects per operator is increased. In other words, when the occurrence of the remote request event associated with the importance level satisfying a predetermined condition is prevented, it is possible to achieve efficient personnel costs while maintaining the proper service management.

Moreover, when there are some possible conditions each of which prevents the occurrence of the remote request event associated with the importance level satisfying a predetermined condition, a condition with the highest service quality of a service using mobile objects may be selected from among the possible conditions. With this, in terms of the service quality, it is possible to maintain the more proper service management.

When a request from a service user to move the mobile object is accepted after the event database is generated, mobile condition determiner 206 generates and outputs control information with the mobile condition that prevents the occurrence of the remote request event associated with the importance level satisfying a predetermined condition. Mobile condition determiner 206 is one example of the outputter. The outputted control information is transmitted to control information transmitter 202. Control information transmitter 202 then transmits the outputted control information to control information receiver 102 in mobile object 100 in the same manner as the control information transmitted from remote controller 201. Control information receiver 102 transmits, to controller 101, the control information transmitted from control information transmitter 202. Controller 101 then moves mobile object 100 by driving a driving unit and the like according to the control information transmitted from control information receiver 102. This movement is made under the mobile condition that prevents the occurrence of the remote request event associated with the importance level satisfying a predetermined condition, and thus the bad effect exerted on the service management can be relatively limited.

Next, an information processing method performed by information output system 500 described above is described with reference to FIG. 5 to FIG. 7. FIG. 5 is a flowchart illustrating the process of the information output system according to the embodiment. FIG. 6 is the first diagram for explaining the process of the information output system according to the embodiment. FIG. 7 is the second diagram for explaining the process of the information output system according to the embodiment.

As shown in FIG. 5, firstly, the first information is obtained by sensor unit 104 obtaining sensor information and by recognizer 106 generating the recognition result from the obtained sensor information (Step S101). Remote request determiner 103 detects the occurrence of a remote request event based on the first information (Step S102). (Information indicating the occurrence of) the detected remote request event is transmitted along with the sensor information and the recognition result from mobile object 100 to server device 200 through mobile information transmitter 105.

Next, remote controller 201 and remote intervention device 300 communicate with each other, and thus an operator can check the remote request event, the sensor information, and the recognition result. According to the remote request event, the sensor information, and the recognition result, the operator intervenes in the operation of the mobile object remotely or on site if necessary.

In doing so, remote intervention device 300 obtains the second information regarding the operator in the intervention. Remote intervention device 300 transmits the obtained second information to importance level determiner 204. The importance level determiner calculates the importance level of the remote request event based on at least one of the fist information or the second information (Step S104). Event register 205 then transmits, to storage device 207, the detected remote request event, the importance level of this remote request event, and other various parameters related to this remote request event in association with one another. Storage device 207 generates an event database by accumulating associated data sets in the connected storage (Step S105).

Subsequently, when a request from a service user to move the mobile object is accepted, mobile condition determiner 206 generates and outputs control information with the mobile condition that prevents the occurrence of the remote request event associated with the importance level satisfying a predetermined condition (Step S106).

Hereinafter, Step S106 is described in details with reference to the implementation examples. Here, it is assumed that a package pickup service and a transportation service are performed in parallel using mobile objects. Specifically, two use examples are performed in parallel: one is in which package pickup is requested from a package pickup service user, and the mobile object moves from a waiting area to a destination (such as the house of the service user) and goes back to the waiting area after receiving the package; and the other is in which the mobile object moves to the specified pickup location to pick up a transportation service user and moves to the specified drop-off location.

It is to be noted that, as shown in FIG. 6 and FIG. 7, operator O1 stands by at a remote site to intervene in the operations of three mobile objects including mobile objects waiting at the waiting area denoted by point S, i.e., mobile object V1, mobile object V2, and mobile object V3. The type of mobile object V1 and the type of mobile object V2 are the same (model A: allowable load of up to 150 kg and up to 200 cm³, maximum speed of 3 km/h, capacity of 2 persons), and only the type of mobile object V3 is different in mobile performance and the like (model B: allowable load of up to 20 kg and up to 50 cm³, maximum speed of 4 km/h, capacity of 0 persons). It is assumed that the event database shown in FIG. 4 is already generated from the first information and the second information obtained from the previous service management.

It is assumed that a package pickup service user has a house at point A in the drawings, and makes a request for pickup of a package having the size of 10 cm × 20 cm × 40 cm and the weight of 10 kg at 13:30 on October 20, 2021.

Information output system 500 outputs control information by reference to the event database. Specifically, in the event database, condition parameters regarding an event occurrence condition are included in the various parameters associated with the remote request event and the importance level. For example, the condition parameters are an occurrence factor, an occurrence date, occurrence hours, an occurrence location, information regarding a mobile object type and a mobile condition, included in FIG. 4. The mobile condition determiner identifies a remote request event with relatively high importance level, and outputs the control information for controlling a mobile object to have a condition with condition parameters that do not at least partially match the condition parameters associated with the identified remote request event.

In order to output the control information for controlling the mobile object to have such a condition as described above, the mobile condition determiner changes the condition, e.g., controls the mobile object to move along a route different from the route indicated by the information included in the condition parameters, controls a mobile object whose type is different from the type indicated by the information included in the condition parameters, controls the mobile object to do traveling different from the traveling history indicated by the information included in the condition parameters, or controls the mobile object during hours different from the hours indicated by the information included in the condition parameters.

For example, the mobile condition determiner selects a remote request event with a high importance level, and changes at least part of the condition parameters associated with the remote request event to different parameters to generate a control information candidate. The remote request determiner and the importance level determiner then calculate an estimated importance level of an anticipated event of the mobile object when the mobile object moves according to the generated control information candidate, and generation of the control information candidate and calculation of the estimated importance level are repeated until the estimated importance level becomes relatively low. As one example, the mobile condition determiner generates the control information in which the occurrence location of the remote request event with ID 6 shown in FIG. 4 has been changed from "area D" to "area C". The generated control information is the same as that of the remote request event with ID 3, and thus the estimated importance level is relatively low level of "0.1".

It is to be noted that determination of whether the estimated importance level is relatively low is made based on whether the sum of the estimated importance levels calculated for all the mobile objects whose operations operator O1 intervenes in exceeds an importance-level threshold set for operator O1. The importance-level threshold varies depending on operator's career or the like, and thus is not particularly limited. Any numerical value is possible as long as the threshold is appropriately set by a manager or the like of the information output system. As one example, in this example, the reference value of "1" is assigned to one operator, and the importance-level threshold is obtained by dividing the assigned reference value by the number of mobile objects whose operations the operator intervenes in. Accordingly, the importance-level threshold of this operator O1 is 1/3 = 0.33.

In comparison to this importance-level threshold, the estimated importance level (0.1) of the control information in which the occurrence location of the remote request event with ID 6 shown in FIG. 4 has been changed from "area D" to "area C" is sufficiently low, and thus this control information is outputted. In FIG. 6, mobile object V1 is controlled to move according to this control information. It is to be noted that, before mobile object V1 starts to move, for example, communication with the package pickup service user is performed regarding provision of conditions of use, service fees, etc., and approvals thereof.

Next, it is assumed that a transportation service user specifies point B in the drawings as the specified pickup location and point C as the specified drop-off location, and makes a request for pickup of one person at pickup time of 13:15 on October 20, 2021.

The information output system refers to the event database and outputs control information. As one example, the mobile condition determiner generates the control information in which the mobile object information of the remote request event with ID 7 shown in FIG. 4 has been changed from "model B" to "model A". The generated control information is the same as that of the remote request event with ID 5, and thus the estimated importance level of "0.2" is calculated.

The service in which the estimated importance level of the package pickup service is 0.1 is already performed, and thus the sum of the estimated importance levels calculated for all the mobile objects whose operations operator O1 intervenes in is 0.1 + 0.2 = 0.3. In other words, in comparison to the importance-level threshold, the estimated importance level (0.2) of the control information in which the mobile object information of the remote request event with ID 7 shown in FIG. 4 has been changed from "model B" to "model A" is sufficiently low, and thus this control information is outputted. In FIG. 7, mobile object V2 is controlled to move according to this control information. It is to be noted that, before mobile object V2 starts to move, communication with the transportation service user is performed regarding provision of conditions of use, service fees, etc., and approvals thereof.

In the above example, the control information is outputted from the remote request event registered in the event database by changing at least part of the condition parameters to different parameters, but the information output system may output the control information without changing the condition parameters associated with the remote request event as long as the remote request event with a relatively low importance level is already registered in the event database. For this reason, the event database may exhaustively cover the remote request event, the importance level, and the condition parameters. More ideally, a remote request event such that the service can be achieved without any remote intervention, in which no remote intervention occurs, may be registered in the event database as one of remote request events. In outputting the control information, condition parameters associated with the remote request event in which the importance level is the minimum value or less than the importance-level threshold (including the remote request event indicating that no remote intervention occurs) may be outputted as the control information.

In order to achieve the above, the minimum importance level (e.g., 0) and the remote request event indicating that no remote intervention occurs may be registered along with the condition parameters. In the case where such a remote request event indicating that no remote intervention occurs is registered, for example, even when the estimated importance level of the anticipated event is calculated as described above, it can be determined whether the control information indicates condition parameters already registered in the event database or totally new condition parameters. Accordingly, it is possible to contribute to reduction in cost of the calculation of the estimated importance level. Moreover, a remote request event may be registered using the movement after the end of service as described below, and a virtual remote request event may be registered as described later.

After the end of service, mobile object V1 and mobile object V2 go back to the waiting area. In doing so, a route for adding information to the event database may be selected to move. For example, at least one of mobile object V1 or mobile object V2 may move so that the mobile object passes through a point that the mobile object never has passed through and at a time when the mobile object never has passed. In doing so, the virtual remote request event and the importance level may be backwardly calculated from only a parameter obtained on a route opposite to a route from the waiting area toward another point (i.e., a route from another point toward the waiting area).

Specifically, in the event database, a remote request event, the importance level for the remote request event, and a parameter regarding the occurrence factor of the remote request event are associated with one another. When a parameter matching this parameter regarding the occurrence factor is obtained, the virtual remote request event and the importance level may be determined using the remote request event already registered in the event database and an importance level corresponding to the importance level for the remote request event to improve the event database.

More specifically, for example, it is assumed that a load context such as a "muddy load" is registered at a certain point as the occurrence factor of the remote request event. In the case where the "muddy load" is detected when the mobile object passes through another point, the same remote request event as the certain point may be registered also for the another point. Also in terms of the importance level, a similar numerical value may be registered. It is to be noted that the remote request event and the importance level registered in association with the parameter at this another point are not derived from real travelling (the type of mobile object or the like is different), and thus the importance level may be a corrected value obtained by multiplying the importance level registered at the certain point by a correction coefficient of less than 1. In other words, the importance level corresponding to the importance level for the remote request event means a corrected value corresponding to the importance level for the remote request event.

Moreover, as another example of the registration of the virtual remote request event, a method of virtually generating a remote request event that periodically occurs and registering the generated remote request event together with its importance level is also possible. For example, it is assumed that the detected remote request event, the importance level calculated for the detected remote request event, and a parameter regarding the occurrence time of the detected remote request event are associated with one another.

In the case where a parameter regarding the occurrence time associated with one remote request event and a parameter regarding the occurrence time associated with another remote request event indicate periodicity, this case is regarded as a case where a similar remote request event periodically occurs as long as the one remote request event and the another remote request event are of the same type. To indicate the periodicity means that a remote request event occurs at certain intervals (at intervals of a day in the above case), e.g., the remote request event occurs during the same hours of one day and another day.

Accordingly, in this case, a virtual remote request event and the importance level may be determined for a different parameter indicating the periodicity for the parameter associated with one remote request event and the parameter associated with another remote request event, to improve the event database. For example, the different parameter may be accumulated in the storage in association with one remote request event (or another remote request event) and the importance level corresponding to the importance level associated with the one remote request event (or the importance level associated with the another remote request event). Also in this example, a corrected value corresponding to the importance level for the original remote request event may be registered as the importance level corresponding to the importance level for the remote request event.

Moreover, the event database may be updated by obtaining information for correcting a condition parameter and a remote request event already registered in the event database. For example, for a condition parameter and a remote request event already registered in the event database, when the same control information as the condition parameter is outputted to move the mobile object and then the remote request event does not occur (the remote request event is not detected), information on the condition parameter and the remote request event may be deleted from the event database, or the importance level associated with the remote request event may be reduced by a predetermined value (a certain value or a predetermined factor of 1 or less).

In the event database, as one example of a quality parameter regarding the effect on decrease in service quality, service loss time is associated with the remote request event. In outputting the control information, when there are some condition parameters that can prevent the remote request event whose importance level satisfies the predetermined condition, for example, a condition parameter is set based on the quality parameter to minimize the effect on decrease in service quality and the control information may be outputted. For example, when the estimated importance level of the anticipated event is calculated as described above, the estimated quality parameter (e.g., the estimated value of the service loss time) is also calculated, and such a condition parameter that the calculated estimated quality parameter is lower in the effect on decrease in service quality than the quality threshold may be outputted as the control information. Alternatively, when the condition parameter of the remote request event with the importance level that is the minimum or less than the importance-level threshold in the event database is outputted as the control information, on the basis of the quality parameter, the condition parameter among the condition parameters may be outputted as the control information so that the effect on decrease in service quality is minimum. In addition to the service loss time, the quality parameter includes a degree of damage to a product during shipment, a review from a user through the service, or the like.

In the above example, the case where information output system 500 automatically output the control information for the mobile object is described, but the outputted control information may be modifiable by an operator. The following describes the configuration for the operator to modify the control information. FIG. 8 to FIG. 10 are each a diagram illustrating one example of the user interface for operator input according to the embodiment.

As described above, when information output system 500 automatically output the control information for the mobile object, the operator only have to handle the remote intervention occurring under control by the control information. However, it is up to the operator whether to have an unfamiliar type of the remote intervention or to determine that the control information can be more appropriately changed in context, and thus the operator may want to provide control information different from the control information outputted by information output system 500.

In view of this, in the following description, for example, as shown in FIG. 8, information output system 500 provides presentation information for displaying an image on display device 301 to present information to the operator. As shown in the drawing, area information such as a map or a floor map (the lower left) and a route, destination, current position of a mobile object, an event occurrence location, and the like superimposed on the area information are displayed in the image. The area information gives the operator a bird's-eye view of the current service status (a degree of progress) of each mobile object.

In addition, as shown in the drawing, information indicating the states of the mobile objects (the upper left) is displayed in the image. The information indicating the states of the mobile objects includes service statuses, states of mobile objects, circumstances, etc. In the drawing, it is indicated in letters as the service statuses that mobile object V1 is in the package pickup service and mobile object V2 is in the transportation service. It is also indicated in letters as the states of mobile objects that mobile object V1 is normal and mobile object V2 has relatively high inner temperature. It is also indicated in letters as the circumstances that mobile object V1 has a possibility of occurrence of intervention by the operator after a short time (e.g., within 10 minutes). Along with this, a camera image from the mobile object is displayed for the operator to understand the circumstances before start of the intervention. As described above, display device 301 displays, using the image, one or more items among mobile conditions (date and time of the movement, a route, a type of mobile object, control information, surrounding environment information), or information such as the camera image of the mobile object.

The left side of the drawing is an information presentation part for informing the operator of the states of the mobile objects, whereas the right side of the drawing is a part for information presentation and for reception of an input from the operator. Specifically, as shown in the drawing, for each of the mobile objects (assigned to the operator for handling), the right side indicates when and what event may occur (i.e., whether an anticipated event occurs) on a time-series graph in which time progresses from the top to the bottom. For example, for mobile object V1, a remote request event with the importance level of 0.1 to check the circumstances may occur at around 13:00. Moreover, for mobile object V2, a remote request event with the importance level of 0.2 to perform a remote operation may occur shortly thereafter.

Referring to the event database, the remote request event of mobile object V2 is present as the event registered in the past movement under the same condition, and thus one or more items among information items of the registered remote request event (an event name, an importance level, a service loss time, an event occurrence date, occurrence hours, an occurrence location, mobile object information, and handling-by-operator information) are displayed as related information. In this case, it is indicated that operator B has performed a remote intervention for two minutes in the past. In consideration of the experience of operator B or the like, the current handler can estimate how long it takes himself/herself to complete the remote intervention. In order to achieve that, a log of remote request events in each of which operator intervention has occurred in the past is recorded on the event database.

Here, for example, the operator can adjust the expected occurrence times of these remote request events. FIG. 9 illustrates an exemplary screen display in the case where the remote request event of mobile object V1 is selected. When the remote request event of mobile object V1 is selected, an adjustable time range of the expected occurrence time of this event in the information output system is displayed. For example, in the drawing, the remote request event is movable within the range of the dashed box. For example, this time range includes a range from the time required for the shortest movement to the point where the remote request event occurs, to the latest time to complete the service by the required time from a user in the service of mobile object V1.

In this time range, a time range in which a remote request event occurs for another mobile object V2 that is needed to be simultaneously handled by the operator (i.e., a time range in which the remote request events overlap) is indicated by hatching in a form different from that of another time range. It is to be noted that the difference in display form can be indicated by a difference in any form such as a color, a pattern, or a shape. Typically, information output system 500 outputs the control information to prevent simultaneous occurrence of multiple remote request events. However, the operator's adjustment as described above can intendedly cause multiple remote request events to simultaneously occur. It is to be noted that, in consideration of the experience of the operator or the like, the two or more remote request events may be set to be able to overlap (i.e., simultaneously occur) up to a predetermined number. In this case, in the control information automatically outputted by information output system 500, overlap of the two or more remote request events is already allowed up to a predetermined number. Moreover, also for a frequent remote request event that does not overlap but occurs in several minutes or the like, information output system 500 may handle the remote request event in the same manner as the overlap. It is to be noted that, in the adjustment of the expected occurrence time of the remote request event as described above, a difference in display form occurs only when the remote request events are overlapped so that the number of overlapped remote request events exceeds the predetermined number. The adjustment such that the display form is different and the remote request events overlap greater than the predetermined number may be prohibited by information output system 500. This allows for a more stable provision of the service using the mobile objects since each operator does not overlap the remote request events the number of which exceeds the predetermined number given to him/her.

When the expected occurrence time of the remote request event is changed by the operator, information output system 500 adjusts the expected occurrence time of the remote request event by increasing or decreasing the speed of the mobile object or by stopping the mobile object temporarily, or adjusts the expected occurrence time of the remote request event by changing the route.

On the other hand, FIG. 10 illustrates another exemplary screen display in the case where the remote request event of mobile object V1 is selected. Either the remote-request-event selection shown in FIG. 9 or the remote-request-event selection shown in FIG. 10 can be performed.

In the example shown in FIG. 10, the remote request event of mobile object V1 shown in FIG. 8 is selected as a cancellation candidate. In other words, FIG. 10 shows the result of the operation performed by the operator to cancel the remote request event of mobile object V1 shown in FIG. 8. In this example, instead of the remote request event of mobile object V1 shown in FIG. 8, another remote request event of mobile object V1 (circumstance check with the importance level of 0.3) is displayed as a candidate in the form of the dashed box. Also in the area information, the changed route caused by canceling the remote request event of mobile object V1 shown in FIG. 8 is denoted by the dashed arrow. When accepting this change, the operator only has to select "Yes" in response to a query from information output system 500 of "Do you change the mobile condition to prevent this event from occurring?" After doing so, the dashed-line part changes to the solid-line part, and the control information is outputted to be consistent with this change, thereby changing the control of mobile object V1.

On the other hand, when wanting to discard the change in the mobile condition in view of another resulting remote request event, a route, or the like, the operator only has to select "NO" in response to a query from information output system 500. After doing so, the screen display goes back to that shown in FIG. 8, and mobile object V1 continues to move without change in control information.

It is to be noted that, in such cancelling a remote request event, changeable condition parameters are retrieved regardless of the importance-level threshold or the like as long as the demands of service users are fulfilled. Unfortunately, when a possible change cannot be suggested, it is displayed that cancelling the remote request event is impossible.

Although the information output method and the like according to one or more aspects has been described above based on the embodiment, the present disclosure is not limited to the embodiment. Various modifications of the embodiment as well as embodiments resulting from arbitrary combinations of the structural elements of the embodiment that may be conceived by those skilled in the art are intended to be included within the scope of one or more aspects as long as these do not depart from the essence of the present disclosure.

For example, although the foregoing describes outputting the control information for the second mobile object in assuming that information included in the event database is unchangeable, the latest information is always registered in the event database since multiple mobile objects are simultaneously controlled as described in the examples. In some cases, after outputting the control information to the second mobile object, the system may output more optimal control information. Accordingly, based on the latest event database, the control information may be revised regularly and changed as needed (replacement of the current control information with another control information).

Moreover, for example, due to update of each resource such as a software program for self-driving, an information output system, or the performance of a mobile object, the past remote request event in the event database may not be directly evaluated. In such a case, the importance level may be corrected according to the updated resource to output the control information using a provisional corrected importance level. In doing so, before outputting control information, a query may be made after presenting, to the operator, what kind of resource has been updated. The permission is received from the operator, and then the control information may be outputted to the second mobile object. In other words, according to the determination by the operator based on the updated resource, whether the control information is appropriate may be inputted to the information output system.

Moreover, although the foregoing describes the occurrence of a remote request event in assuming that every remote request events have an equal probability, in fact, the occurrence probability may be different for each of the remote request events. In such a case, whether the importance level satisfies the predetermined condition may be determined also in consideration of the occurrence probability. For example, even when the importance level is 0.7, the remote request event with the occurrence probability of 10% may be handled as having the importance level to which the probability of 0.7 × 0.1 = 0.07 is added. The occurrence probability may be registered in the event database using the number of times that the remote intervention actually occurs when a remote request event is performed several times in advance, or the probability selected by the operator based on his or her experience from among four probability stages (e.g., 100%, 70-99%, 25-69%, and 1-24%) may be registered in the event database.

Each of the structural elements in the above-described embodiment may be configured in the form of an exclusive hardware product, or may be realized by executing a software program suitable for each of the structural elements. Each of the structural elements may be realized by means of a program executing unit, such as a central processing unit (CPU) and a processor, reading and executing the software program recorded on a recording medium such as a hard disk or a semiconductor memory. Here, the software which realizes the information generation device and the like according to the above-described embodiment is a program as described below.

In other words, the program is a program that causes a computer to execute the information output method.

### [Industrial Applicability]

The present disclosure is applicable to, for example, determination of a route for a self-propelled mobile object.

### [Reference Signs List]

- 100: mobile object
- 101: controller
- 102: control information receiver
- 103: remote request determiner
- 104: sensor unit
- 105: mobile information transmitter
- 106: recognizer
- 150: network
- 200: server device
- 201: remote controller
- 202: control information transmitter
- 203: mobile information receiver
- 204: importance level determiner
- 205: event register
- 206: mobile condition determiner
- 207: storage device
- 300: remote intervention device
- 301: display device
- 302: steering unit
- 500: information output system

## Claims

1. An information output method in an information output device, the information output method comprising:
obtaining first information regarding a movement of a first mobile object operated by autonomous mobility and remote control;
detecting, based on the first information, an event that occurs while the first mobile object is moving;
obtaining second information regarding an operator who intervenes an operation of the first mobile object;
calculating an importance level of the event based on at least one of the first information or the second information; and
outputting control information for controlling a second mobile object to prevent occurrence of the event whose importance level calculated satisfies a predetermined condition.

2. The information output method according to claim 1, wherein
the outputting of the control information includes:
referring to an event database in which the event and the importance level calculated for the event are associated with each other; and
outputting the control information for controlling the second mobile object to prevent occurrence of the event associated with an importance level satisfying the predetermined condition in the event database.

3. The information output method according to claim 2, further comprising:
generating the event database by accumulating the following in a storage in association with each other: the event detected based on the first information; and the importance level calculated for the event.

4. The information output method according to claim 3, wherein
in the event database, the event detected, the importance level calculated for the event, and a parameter regarding an occurrence factor of the event are associated with one another, and
the generating of the event database further includes: obtaining a different parameter matching the parameter associated with one event accumulated; and accumulating the following in the storage in association with the different parameter obtained: the one event; and an importance level corresponding to the importance level associated with the one event.

5. The information output method according to claim 3, wherein
in the event database, the event detected, the importance level calculated for the event, and a parameter regarding an occurrence time of the event are associated with one another, and
when the parameter associated with one event accumulated and the parameter associated with another event accumulated indicate periodicity, the generating of the event database further includes accumulating the following in the storage in association with one another: a different parameter indicating the periodicity for the parameter associated with the one event and the parameter associated with the another event; the one event; and an importance level corresponding to the importance level associated with the one event.

6. The information output method according to any one of claims 2 to 5, wherein
in the event database, the event detected, the importance level calculated for the event, and one or more condition parameters regarding an occurrence condition of the event are associated with one another, and
the outputting of the control information includes outputting the control information for controlling the second mobile object to have a condition with one or more condition parameters that do not at least partially match the one or more condition parameters associated with the event whose importance level calculated satisfies the predetermined condition.

7. The information output method according to claim 6, wherein
the one or more condition parameters include information indicating a route along which the first mobile object moves, and
the outputting of the control information includes outputting the control information for controlling the second mobile object to move along a route different from the route indicated by the information included in the one or more condition parameters associated with the event whose importance level calculated satisfies the predetermined condition.

8. The information output method according to claim 6, wherein
the one or more condition parameters include information indicating a type of the first mobile object, and
the outputting of the control information includes outputting the control information for controlling the second mobile object whose type is different from the type indicated by the information included in the one or more condition parameters associated with the event whose importance level calculated satisfies the predetermined condition.

9. The information output method according to claim 6, wherein
the one or more condition parameters include information indicating a traveling history of the first mobile object, and
the outputting of the control information includes outputting the control information for controlling the second mobile object to do traveling different from the traveling history indicated by the information included in the one or more condition parameters associated with the event whose importance level calculated satisfies the predetermined condition.

10. The information output method according to claim 6, wherein
the one or more condition parameters include information indicating hours during which the first mobile object moves, and
the outputting of the control information includes outputting the control information for controlling the second mobile object during hours different from the hours indicated by the information included in the one or more condition parameters associated with the event whose importance level calculated satisfies the predetermined condition.

11. The information output method according to claim 1, wherein
the operator intervenes in operations of one or more second mobile objects each of which moves according to the control information outputted, the one or more second mobile objects each being the second mobile object, and
the outputting of the control information includes:
calculating, for each of the one or more second mobile objects, an estimated importance level of an anticipated event of the second mobile object when moving according to the control information to be outputted; and
outputting the control information for controlling the second mobile object to prevent a sum of estimated importance levels calculated for all the one or more second mobile objects from exceeding an importance-level threshold set for the operator.

12. The information output method according to claim 2, wherein
the outputting of the control information includes outputting the control information for controlling the second mobile object to prevent, by referring to the event database, occurrence of the event associated with an importance level satisfying the predetermined condition, and to minimize, based on a quality parameter, an effect on decrease in service quality.

13. The information output method according to claim 1, further comprising:
outputting presentation information for presenting, to the operator, an expected occurrence time of an anticipated event of the second mobile object when moving according to the control information to be outputted, wherein
the presentation information includes the expected occurrence time of the anticipated event and a time range in which it is allowed to change the expected occurrence time of the anticipated event through input from the operator.

14. An information output device, comprising:
a first obtainer that obtains first information regarding a movement of a first mobile object operated by autonomous mobility and remote control;
a detector that detects, based on the first information, an event that occurs while the first mobile object is moving;
a second obtainer that obtains second information regarding an operator who intervenes an operation of the first mobile object;
a calculator that calculates an importance level of the event based on at least one of the first information or the second information; and
an outputter that outputs control information for controlling a second mobile object to prevent occurrence of the event whose importance level calculated satisfies a predetermined condition.

15. A program for causing a computer to execute an information output method in an information output device,
the information output method comprising:
obtaining first information regarding a movement of a first mobile object operated by autonomous mobility and remote control;
detecting, based on the first information, an event that occurs while the first mobile object is moving;
obtaining second information regarding an operator who intervenes an operation of the first mobile object;
calculating an importance level of the event based on at least one of the first information or the second information; and
outputting control information for controlling a second mobile object to prevent occurrence of the event whose importance level calculated satisfies a predetermined condition.
